**Europäisches Patentamt**

**European Patent Office**

**Office européen des brevets**

(11) Veröffentlichungsnummer: **0 317 635**

**A1**

## (12) EUROPÄISCHE PATENTANMELDUNG

Veröffentlicht nach Art. 158 Abs. 3 EPÜ

(21) Anmeldenummer: **87906036.6**

(22) Anmeldetag: **16.06.87**

Daten der zugrundeliegenden internationalen Anmeldung:

(86) Internationale Anmeldenummer:
**PCT/SU87/00070**

(87) Internationale Veröffentlichungsnummer:
**WO88/10164 (29.12.88 88/28)**

(51) Int.Cl.³: **B 23 B 27/12**

(43) Veröffentlichungstag der Anmeldung:
**31.05.89 Patentblatt 89/22**

(84) Benannte Vertragsstaaten:
**AT DE FR IT SE**

(71) Anmelder: **FIZIKO-TEKHNICHESKY INSTITUT AKADEMII NAUK BELORUSSKOI SSR**
ul. Zhodinskaya, 4
**Minsk, 220730(SU)**

(72) Erfinder: **BORISENKO, Alexandr Vasilievich**
**Leninsky pr., 127-178**
**Minsk, 220114(SU)**

(72) Erfinder: **PODREZENKOV, Vladimir Valeryanovich**
**Leninsky pr., 91-143**
**Minsk, 220012(SU)**

(74) Vertreter: **Kohlmann, Karl Friedrich, Dipl.-Ing. et al,**
**Hoffmann, Eitle & Partner Arabellastrasse 4 (Sternhaus)**
**D-8000 München 81(DE)**

(54) **ROTIERENDES SCHNEIDEWERKZEUG.**

(57) Die Erfindung bezieht sich auf die Metallbearbeitung, insbesondere auf einen Rotationsmeißel.

Der erfindungsgemäße Rotationsmeißel enthält eine Vorrichtung zum Festziehen von Drucklagern (9 und 11), die aus zwei konzentrisch angeordneten, Kegelflächen aufweisenden und einander über diese Kegelflächen zugeordneten Einzelteilen besteht, von denen das eine Einzelteil eine Zange (26) darstellt, welche mit dem Gehäuse (1) mit Möglichkeit ihrer axialen Verschiebung kinematisch verbunden ist, während das zweite Einzelteil in bezug auf das Gehäuse (1) unbeweglich befestigt ist. Hierbei ist die Zange (26) konzentrisch zum Schaft (5) angeordnet und wirkt über ihre zylindrische Oberfläche (27) mit der zylindrischen Oberfläche (28) des Schaftes (5) zusammen.

FIG.1

ROTATIONSMEISSEL

## Technisches Gebiet

Die vorliegende Erfindung bezieht sich auf die Metallbearbeitung, insbesondere auf einen Rotationsmeißel.

Zugrundeliegender Stand der Technik

Es sind verschiedene Konstruktionen von Rotationsmeißeln bekannt, die aus einem Gehäuse, einer Spindel mit Schneidelement und aus Lagerungen bestehen (siehe E.G.Konovalov u.a. "Progressivnye skhemy rotatsionnogo rezania metallov" /Fortschrittliche Schemas der Rotationszerspannung von Metallen/, 1972, Verlag Nauka i teknika, Minsk, SS. 189-192, 203, 231, 236).

Nachteilig bei diesen Konstruktionen ist die Notwendigkeit, Drucklager mittels einer Mutter festzuspannen, mittels welcher es praktisch unmöglich ist, die nötige Spannkraft für die Lager (und folglich auch ein Reibungsmoment in den Lagerungen) zu erzeugen, die von den in den Lagerungen verwendeten Lagern, den physikalisch-mechanischen Eigenschaften des zu bearbeitenden Werkstoffes und den Schnittbedingungen (Schnittgeschwindigkeit, Spantiefe, Vorschubtiefe) abhängt und beim Verschleiß der Lager abnimmt.

Der vorgeschlagenen Erfindung kommt die Konstruktion eines Meißels am nächsten, der ein Gehäuse, ein Schneidelement, das an einer in Lagerungen angeordneten Spindel befestigt ist, und eine Mutter zum Festspannen von Lagern enthält (E.G.Konovalov u.a. "Progressivnye skhemy rotatsionnogo rezania metallov", 1972, Verlag Nauka i teknika, Minsk, S. 231).

Nachteilig bei dieser Konstruktion ist das Ritzen der bearbeiteten Oberfläche (bei unzureichendem Festspannen der Lager durch die Mutter) infolge einer Durchfederung des Schneidelementes bei dessen Austritt aus der Spanungszone auf die bearbeitete Oberfläche (z.B. beim Fräsen). Um das Ritzen der bearbeiteten Oberfläche zu verhindern, neigt man den Fräser um 2 bis 3°, was wiederum zur Herabsetzung der Bearbeitungsgenauigkeit führt. Bei einem übermäßigen Festspannen aber findet ein "Überstreichen" der bearbeiteten Oberfläche durch die Freifläche des Schneidelementes statt, was zu einer Erhöhung der Rauhigkeit der bearbeiteten Oberfläche und zu einem beschleunigten Verschleiß des Schneidelelementes führt, wobei in manchen Fällen das übermäßige Festspannen die Bildung von Einbeulungen an der Oberfläche der Rollbahnen der Lager hervorruft.

Offenbarung der Erfindung

Der vorliegenden Erfindung liegt die Aufgabe zugrunde einen Rotationsmeißel zu schaffen, bei dem die Vorrichtung zum Festziehen von Drucklagern solcherweise ausgeführt wäre, daß eine optimale Spannkraft für diese Lager in Abhängigkeit von ihrem Typ, dem Verschleiß, den physikalisch-mechanischen Eigenschaften des zu bearbeitenden Materials und Schnittbedingungen (Schnittgeschwindigkeit, Spantiefe, Vorschubtiefe) erzeugt wird und dadurch die Qualität der zu bearbeitenden Oberfläche und die Standzeit des Werkzeuges erhöht werden.

Die gestellte Aufgabe wird dadurch gelöst, daß im Rotationsmeißel, der eine in einem Gehäuse in vorderen und hinteren Lagerungen mit Drucklagern angeordnete Spindel, welche einen Schaft mit zylindrischer Oberfläche besitzt und ein Schneidelement trägt, sowie eine Vorrichtung zum Festziehen der Drucklager enthält, erfindungsgemäß die Vorrichtung zum Festziehen der Drucklager aus zwei Einzelteilen besteht, die konzentrisch angeordnet sind und zugeordnete Kegelflächen aufweisen, von welchen das eine Einzelteil eine zum Schaft konzentrisch angeordnete Zange darstellt, die über ihre zylindrische Oberfläche mit der zylindrischen Oberfläche des Schaftes zusammenwirkt und mit dem Gehäuse mit Möglichkeit ihrer axialen Verschiebung während des Zerspanvorgangs kinematisch verbunden ist, während das andere Einzelteil in bezug auf das Gehäuse unbeweglich befestigt ist.

Dank der erfindungsgemäß vorgeschlagenen Konstruktion des Meißels spannt die Zange während des Arbeitsprozesses, indem sie sich auf der Kegelfläche des zweiten Einzelteils der Vorrichtung zum Festziehen von Drucklagern bewegt, den Schaft ein, wobei das zweite Einzelteil der Vorrichtung zum Festziehen von Drucklagern es nicht gestattet, daß sich die Drucklager lösen, was die Durchfederung des Schneidelementes bei dessen Austritt aus der Spanungszone und das übermäßige Festspannen der Drucklager beseitigt. Dies wiederum erhöht die Qualität der bearbeiteten Oberfläche und die Standzeit des Werkzeuges.

Mit dem Ziel, die Herstellung des Rotationsmeißels zu erleichtern, ist es zweckmäßig, daß die Zange auf dem Schaft angebracht und mit ihrer Außenfläche dem zweiten, als Buchse ausgebildeten Einzelteil der Vorrichtung zum Festziehen von Drucklagern zugeordnet ist.

Bei der Notwendigkeit, die axialen Maße des Rotationsmeißels zu verringern, kann der Schaft mit einem zylindrischen Hohlraum ausgeführt sein, in welchem die Zange untergebracht ist, die mit ihrer Innenfläche dem zweiten Einzelteil der Vorrichtung zum Festziehen von Drucklagern, welches als Kegel ausgebildet ist, zugeordnet ist.

Es ist in konstruktiver Hinsicht am einfachsten, die kinematische Verbindung der Zange mit dem Gehäuse mittels eines längs der Spandelachse angeordneten Drucklagers, das am Gehäuse unbeweglich befestigt ist, und eines federnden Elementes, das auf dem Schaft zwischen der Stirnfläche der Zange und diesem Drucklager angeordnet ist, herzustellen.

Zur Vereinfachung der Konstruktion des Rotationsmeißels ist es zweckmäßig, daß das federnde Element als
Teilerfeder ausgebildet ist.

Falls die Spannkraft beim Einspannen des Schaftes
durch die Zange häufig verändert werden muß, ist es möglich, daß das federnde Element einen Druckluftzylinder
darstellt, dessen Gehäuse mit dem Drucklager zusammenwirkt, wobei als Kolben ein in den Hohlraum des Zylinders hineinragender Teil der Zange dient.

Um den Einfluß der Abstandsfehler zwischen der Buchse der Vorrichtung zum Festziehen von Drucklagern und
dem am Gehäuse längs der Spindelachse starr befestigten
Drucklager auszuschalten, ist es zweckmäßig, daß die
Buchse der Vorrichtung zum Festziehen von Drucklagern in
bezug auf das Gehäuse mit Hilfe eine  gewundenen Feder
unbeweglich befestigt ist, die zwischen der Stirnfläche
der Buchse und dem am Gehäuse längs der Spindelachse
starr befestigten Drucklager angeordnet ist.

Bei der Notwendigkeit einer steiferen Fixierung kann
die Buchse der Vorrichtung zum Festziehen von Drucklagern in bezug auf das Gehäuse mit Hilfe einer zylindrischen Büchse unbeweglich befestigt sein, die konzentrisch zur Zange zwischen der Stirnfläche der Buchse und
dem am Gehäuse langs der Spindelachse starr befestigten
Drucklager angeordnet ist.

Mit dem Ziel, die Außenmaße des Rotationsmeißels zu
verringern, ist es zweckmäßig, den Schaft mit einem zylindrischen Hohlraum auszuführen, in dem die Vorrichtung
zum Festziehen von Drucklagern untergebracht ist, welche
aus einem Einzelteil in Form einer Zange und einem Einzelteil in Form eines Kegels besteht, der mit seiner
Außenfläche der Innenfläche der Zange zugeordnet ist.

Zur Verringerung der Abmessungen der Vorrichtung zum
Festziehen von Drucklagern und zur starren Fixierung derselben kann der Kegel der Vorrichtung zum Festziehen von
Drucklagern in bezug auf das Gehäuse mittels eines gleichachsig mit der Spindel angeordneten Bechers, der sich mit seinem Bodenteil an dem am Gehäuse längs der Spindelachse starr befestigten Drucklager und mit seiner Stirnfläche an der hinteren Lagerung abstützt, sowie mittels eines Stabes unbeweglich befestigt sein, der gleichachsig zum Becher angeordnet und mit seinen Enden im Bodenteil desselben und im Kegel starr befestigt ist.

## Kurze Beschreibung der Zeichnungen

Im folgenden wird die vorliegende Erfindung durch eingehende Beschreibung eines konkreten Ausführungsbeispiels derselben unter Hinweisen auf beigefügte Zeichnungen erläutert, in denen es zeigen.

Fig. 1 die Gesamtansicht des erfindungsgemäßen Rotationsmeißels, im Längsschnitt;

Fig. 2 eine Ausführungsform der Vorrichtung zum Festziehen von Drucklagern, bei welcher das federnde Element als Druckluftzylinder ausgebildet ist, im Längsschnitt;

Fig. 3 eine andere Ausführungsform der Vorrichtung zum Festziehen von Drucklagern, bei welcher das als Buchse ausgebildete zweite Einzelteil in bezug auf das Gehäuse mittels einer zylindrischen Büchse unbeweglich befestigt ist, im Längsschnitt;

Fig. 4 eine weitere Ausführungsform der Vorrichtung zum Festziehen von Drucklagern, welche im zylindrischen Hohlraum des Spindelschaftes untergebracht ist, im Längsschnitt.

## Beste Ausführungsform der Erfindung

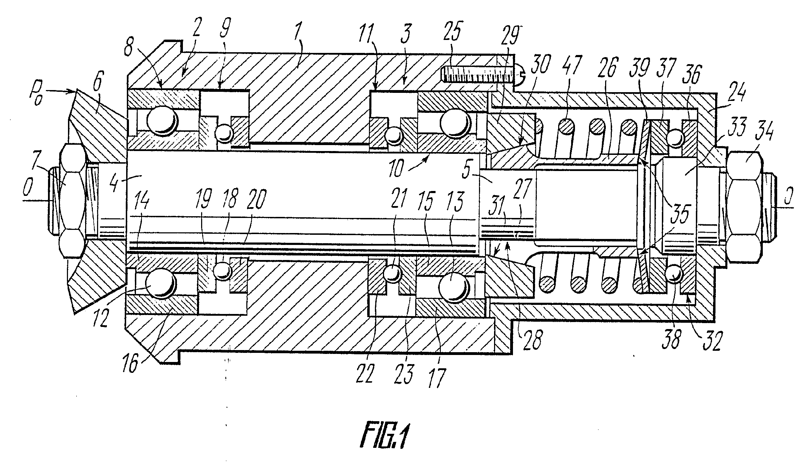

Der in Fig. 1 dargestellte erfindungsgemäße Rotationsmeißel enthält eine in einem Gehäuse 1 in einer vorderen und einer hinteren Lagerung 2 bzw. 3 angeordnete Spindel 4, die einen Schaft 5 besitzt und ein Schneidelement 6 trägt, welches mittels einer Mutter 7 befestigt ist. Die Lagerung 2 enthält ein vorderes Radiallager 8 und ein vorderes Drucklager 9, während die Lagerung 3 ein hinteres Radiallager 10 und ein hinteres Drucklager 11 enthält.

Die Radiallager 8 und 10 beinhalten jeweilige Kugeln 12 und 13, die zwischen einer inneren Fassung 14 bzw. 15 und einer äußeren Fassung 16 bzw. 17 angeordnet sind; das vordere Drucklager 9 beinhaltet Kugeln 18, die zwischen einem Ring 19 und einem Ring 20 angeordnet sind, während das hintere Drucklager 11 Kugeln 21 beinhaltet, die zwischen einem Ring 22 und einem Ring 23 angeordnet sind.

Der Rotationsmeißel enthält eine Vorrichtung zum Festziehen der Drucklager 9 und 11, die im Gehäuse 1 mit Hilfe eines Deckels 24 montiert ist, welcher mittels Schrauben 25 befestigt ist.

Gemäß der Erfindung besteht die Vorrichtung zum Festziehen der Drucklager 9 und 11 aus zwei Einzelteilen, die konzentrisch angeordnet sind und Kegelflächen aufweisen. Die Einzelteile sind mittels dieser Oberflächen einander zugeordnet. Hierbei stellt das eine Einzelteil der Vorrichtung zum Festziehen der Drucklager 9 und 11 eine zum Schaft 5 konzentrische Zange 26 dar, die über ihre zylindrische Oberfläche 27 mit der zylindrischen Oberfläche 28 des Schaftes 5 zusammenwirkt und mit dem Gehäuse 1 mit Möglichkeit ihrer axialen Verschiebung während des Zerspanvorgangs kinematisch verbunden ist. Das andere Einzelteil der besagten Vorrichtung ist in bezug auf das Gehäuse 1 unbeweglich befestigt.

In einer in Fig. 1 dargestellen Ausführungsvariante der Vorrichtung zum Festziehen der Drucklager 9 und 11 ist das Einzelteil als Buchse 29 ausgebildet. Dabei ist das Einzelteil in Form der Zange 26 auf dem Schaft 5 angebracht und mittels der kegeligen Außenfläche 30 dem Einzelteil in Form der Buchse 29 an deren kegeliger Innenfläche 31 zugeordnet.

In diesem Fall wird die kinematische Verbindung der Zange 26 mit dem Gehäuse 1 hergestellt mittels eines Drucklagers 32, das längs der Achse 0-0 der Spindel 4 angeordnet und am Gehäuse 1 mit Hilfe einer Achse 33 und einer Mutter 34 unbeweglich befestigt ist, und eines federnden Elementes, das auf dem Schaft 5 zwischen der Stirnfläche 35 der Zange 26 und diesem Drucklager 32 angeordnet ist. Das Drucklager 32 beinhaltet einen Ring 36, der am Gehäuse 1 starr befestigt ist, einen Ring 37, der mit dem federnden Element zusammenwirkt, und Kugeln 38, die zwischen den Ringen 36 und 37 untergebracht sind.

Zur Vereinfachung der Konstruktion des Rotationsmeißels ist das federnde Element als Tellerfeder 39 ausgebildet.

Bei der Notwendigkeit, die Spannkraft für den Schaft häufig zu verändern, stellt das in Fig.2 abgebildete federnde Element einen Druckluftzylinder 40 dar, dessen Gehäuse 41 mit dem am Gehäuse 1 starr befestigten Drucklager 32 zusammenwirkt. Als Kolben 42 des Druckluftzylinders 40 dient ein Teil des einen Einzelteils der Vorrichtung zum Festziehen der Drucklager 9 und 11, welcher in den Hohlraum 43 des Druckluftzylinders 40 hineinragt. In diesem Fall ist das genannte Einzelteil ebenfalls in Form einer Zange 44 ausgebildet, die auf dem Schaft 45 konzentrisch zu diesem angebracht ist.

Zur starren Fixierung des anderen Einzelteils der Vorrichtung zum Festziehen der Drucklager 9 und 11 in bezug auf das Gehäuse 1, welches Einzelteil eine Buchse 46 darstellt, ist eine gewundene Feder 47 vorhanden, die zwischen der Stirnfläche 48 der Buchse 46 und dem am Gehäuse 1 längs der Achse 0-0 der Spindel 4 starr befestigten Drucklager 32 angeordnet ist.

Für den in Fig. 3 dargestellten Fall, wenn eine steifere Fixierung des anderen Einzelteils der Vorrichtung zum Festziehen der Drucklager 9 und 11 in bezug auf das Gehäuse 1 erforderlich ist, welches Einzelteil als Buchse 49 ausgebildet ist, ist eine zylindrische Büchse 50 vorgesehen, die konzentrisch zu dem einen Einzelteil der besagten Vorrichtung, welches in Form einer Zange 51 ausgebildet ist, zwischen der Stirnfläche 52 der Buchse 49 und dem am Gehäuse 1 längs der Achse O-O der Spindel 4 starr befestigten Drucklager 32 angeordnet ist.

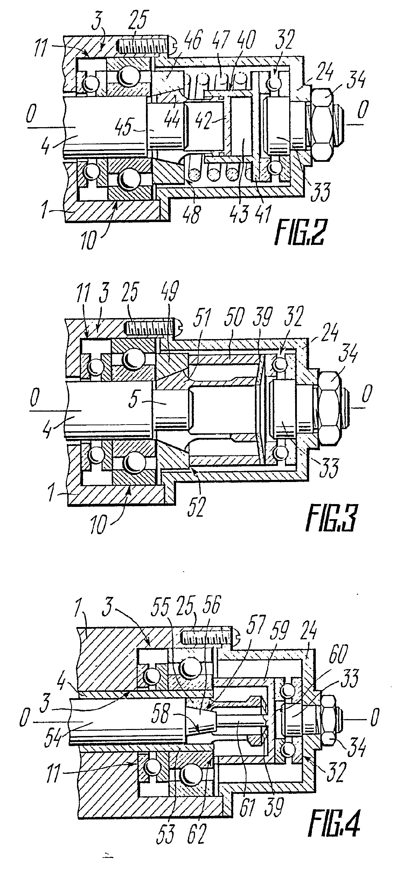

In Fig. 4 ist eine Ausführungsvariante der Vorrichtung zum Festziehen der Drucklager 9 und 11 dargestellt, die sich für eine geringe Außenmaße aufweisende Konstruktion des Meißels anwenden läßt.

Hierbei ist der Schaft 53 mit einem zylindrischen Hohlraum 54 ausgeführt, in dem die Vorrichtung zum Festziehen der Drucklager 9 und 11 untergebracht ist. Das eine Einzelteil dieser Vorrichtung ist als Zange 55 ausgebildet, während das andere Einzelteil dieser Vorrichtung in Gestalt eines Kegels 56 ausgebildet ist, der mit seiner kegeligen Außenfläche 57 der kegeligen Innenfläche 58 der Zange 55 zugeordnet ist.

Zur Verringerung der Abmessungen der Vorrichtung zum Festziehen der Drucklager 9 und 11 und zur starren Fixierung des Kegels 56 ist der letztere in bezug auf das Gehäuse 1 mittels eines gleichachsig mit der Spindel 4 angeordneten Bechers 59, der sich mit seinem Bodenteil 60 an dem am Gehäuse 1 längs der Achse O-O der Spindel 4 starr befestigten Drucklager 32 abstützt, und mittels eines den Kegel 56 fixierenden Stabes 61 unterbeweglich befestigt, welcher gleichachsig mit dem Becher 59 angeordnet und mit seinen Enden im Bodenteil 60 des Bechers 59 und im Kegel 56 starr befestigt ist. Hierbei stützt sich der Becher 59 mit siener Stirnfläche 62 an der hinteren Lagerung 3 ab.

Der Rotationsmeißel arbeitet folgenderweise.

Der Rotationsmeißel wird in dem (nicht gezeichneten) Meißelhalter einer spanabhebenden Werkzeugmaschine aufgenommen. Während des Zerspanvorgangs wird die Spindel 4 zusammen mit dem Schaft 5 unter der Wirkung der Axialkomponente $P_o$ (Fig. 1) der Schnittkraft in Richtung des Gehäusedeckels 24 verschoben, wobei sie gleichzeitig das vordere Drucklager 9 proportional zur Axialkomponente $P_o$ zusammendrückt. Infolge der Wechselwirkung der Kegelfläche 30 der Zange 26 mit der Kegelfläche 31 der Buchse 29 findet dabei ein Lösen der Zange 26 und ein Zusammendrücken der Tellerfeder 39 statt, während sich der Schaft 5 der Spindel 4 längs der Achse 0-0 frei weiter verschiebt.

Nach Aufhören der Verschiebung des Schaftes 5 der Spindel 4 führt das federnde Element in Form der Tellerfeder 39 die Zange 26 in die Ausgangsstellung zurück, welche, indem sie über ihre Kegelfläche 30 mit der Kegelfläche 31 der Buchse 29 zusammenwirkt, den Schaft 5 der Spindel 4 in der neuen Lage festlegt.

Hiernach überträgt die Zange 26, indem sie mit ihrer kegeligen Außenfläche 30 auf die kegelige Innenfläche 31 der Buchse 29 einwirkt, proportional zur Axialkomponente $P_o$ der Schnittkraft die Anzugskraft über das hintere Radiallager 10 der Lagerung 3 auf das hintere Drucklager 11.

Wie in Fig. 2 dargestellt, wird die Spindel 4 zusammen mit dem Schaft 45 unter der Wirkung der Axialkomponente der Schnittkraft (in Fig. nicht gezeigt) in Richtung zum Deckel 24 des Gehäuses 1 verschoben, wobei sie gleichzeitig das (in Fig. nicht gezeigte) vordere Drucklager proportional zur Axialkomponente der Schnittkraft zusammendrückt. Dabei findet infolge der Zusammenwirkung der Zange 44 mit der Buchse 46 ein Lösen der Zange 44 und ein Verdichten der Luft im Hohlraum des Druckluftzylinders 43 statt, während sich der Schaft 45 der Spindel 4 längs der Achse 0-0 frei weiter verschiebt.

Nach Aufhören der Verschiebung des Schaftes 45 der Spindel 4 führt der Kolben 42 des Druckluftzylinders 40 die Zange 44 in die Ausgangsstellung zurück, welche, indem sie mit der Buchse 46 zusammenwirkt, proportional zur Axialkomponente der Schnittkraft die Anzugskraft über das hintere Radiallager 10 der Lagerung 3 auf das hintere Drucklager 11 überträgt.

Während des Zerspanvorgangs (Fig. 3) wird die Spindel 4 zusammen mit dem Schaft 5 unter der Wirkung der Axialkomponente der Schnittkraft (in Fig. nicht gezeigt) in Richtung zum Deckel 24 des Gehäuses 1 verschoben, wobei sie gleichzeitig das (in Fig. nicht gezeigte) vordere Drucklager proportional zur Axialkomponente der Schnittkraft zusammendrückt. Dabei findet infolge der Zusammenwirkung der Zange 51 mit der Buchse 49 ein Lösen der Zange 51 und ein Zusammendrücken der Tellerfeder 39 statt, während sich der Schaft 5 der Spindel 4 längs der Achse O-O frei weiter verschiebt.

Nach Aufhören der Verschiebung des Schaftes 5 der Spindel 4 führt das federnde Element in Form der Tellerfeder 39 die Zange 51 in die Ausgangsstellung zurück, welche, indem sie mit der Buchse 49 zusammenwirkt, den Schaft 5 der Spindel 4 in der neuen Lage festlegt.

Hiernach überträgt die Zange 51, indem sie mit der Buchse 49 zusammenwirkt, proportional zur Axialkomponente der Schnittkraft die Anzugskraft über das hintere Radiallager 10 der Lagerung 3 auf das hintere Drucklager 11.

Während des Zerspanvorgangs (Fig. 4) wird die Spindel 4 zusammen mit dem Schaft 53 unter der Wirkung der der Axialkomponente der Schnittkraft in Richtung zum Deckel 24 des Gehäuses 1, verschoben, wobei gleichzeitig das (in Fig. nicht gezeigte) vordere Drucklager proportional zur Axialkomponente der Schnittkraft zusammendruckt. Dabei findet infolge der Zusammenwirkung der Kegelfläche 58 der Zange 55 mit der Kegelfläche 57 des Kegels 56 ein Lösen der Zange 55 und ein Zusammendrücken der Tellerfeder 39 statt, während sich der Schaft 53 der Spindel 4 längs der Achse O-O frei weiter verschiebt.

Nach Aufhören der Verschiebung des Schaftes 53 der Spindel 4 führt das federnde Element in Form der Tellerfeder 39 die Zange 55 in die Ausgangsstellung zurück, welche, indem sie über ihre Kegelfläche 58 mit der Kegelfläche 57 des Kegels 56 zusammenwirkt, den Schaft 53
der Spindel 4 in der neuen Lage festlegt. Hiernach überträgt die Zange 55, indem sie über ihre kegelige Innenfläche 58 mit der kegeligen Außenfläche 57 des Kegels
56 zusammenwirkt, proportional zur Axialkomponente der
Schnittkraft die Anzugskraft über das hintere Radiallager 10 der Lagerung 3 auf das hintere Drucklager 11.

Auf diese Weise wird das Festspannen der beiden
Drucklager 9 und 11 mit einer Kraft zustandegebracht,
die für konkrete Schnittbedingungen erforderlich ist.

## Gewerbliche Verwertbarkeit

Die Erfindung kann mit dem größten Effekt zur spangebenden Bearbeitung von Werkstoffen mittels eines Rotationsmeißels angewendet werden.

PATENTANSPRÜCHE

1. Rotationsmeißel, der eine in einem Gehäuse(1)in vorderen (2) und hinteren (3) Lagerungen mit Drucklagern (9 und 11) angeordnete Spindel (4), welche einen Schaft (5) mit zylindrischer Oberfläche (28) besitzt und ein Schneidelement (6) trägt, sowie eine Vorrichtung zum Festziehen der Drucklager enthält, dadurch g e k e n n z e i c h n e t, daß die Vorrichtung zum Festziehen der Drucklager aus zwei Einzelteilen besteht, die konzentrisch angeordnet sind und zugeordnete Kegelflächen aufweisen, von welchen das eine Einzelteil eine zum Schaft (5) konzentrische Zange (26) darstellt, die über ihre zylindrische Oberfläche (27) mit der zylindrischen Oberfläche (28) des Schaftes (5) zusammenwirkt und mit dem Gehäuse (1) mit Möglichkeit ihrer axialen Verschiebung während des Zerspanvorgangs kinematisch verbunden ist, während das andere Einzelteil in bezug auf das Gehäuse (1) unbeweglich befestigt ist.

2. Rotationsmeißel nach Anspruch 1, dadurch g e - k e n n z e i c h n e t, daß die Zange (26) auf dem Schaft (5) angebracht und mit ihrer kegeligen Außenfläche (30) dem zweiten, als Buchse (29) ausgebildeten Einzelteil der Vorrichtung zum Festziehen der Drucklager zugeordnet ist.

3. Rotationsmeißel nach Anspruch 1, dadurch g e - k e n n z e i c h n e t, daß die kinematische Verbindung der Zange (26) mit dem Gehäuse (1) mittels eines längs der Achse (0-0) der Spindel (4) angeordneten Drucklagers (32), das am Gehäuse (1) unbeweglich befestigt ist, und eines federnden Elementes, das auf dem Schaft (5) zwischen der Stirnfläche (35) der Zange (26) und diesem Drucklager (32) angeordnet ist, zustandekommt.

4. Rotationsmeißel nach Anspruch 3, dadurch g e - k e n n z e i c h n e t, daß das federnde Element als Tellerfeder (39) ausgebildet ist.

5. Rotationsmeißel nach Anspruch 3, dadurch g e - k e n n z e i c h n e t, daß das federnde Element einen Druckluftzylinder (40) darstellt, dessen Gehäuse (41) mit dem Drucklager (32) zusammenwirkt, wobei als Kolben (42) ein Teil des Einzelteils der Vorrichtung zum Festziehen von Drucklagern dient, welches Einzelteil in Form einer Zange (44) ausgebildet ist, die in den Hohlraum (43) des Druckluftzylinders (40) hineinragt.

6. Rotationsmeißel nach Anspruch 2, dadurch g e - k e n n z e i c h n e t, daß die Buchse (46) der Vorrichtung zum Festziehen von Drucklagern in bezug auf das Gehäuse (1) mit Hilfe einer gewundenen Feder (47) unbeweglich befestigt ist, die zwischen der Stirnfläche (48) der Buchse (46) und dem am Gehäuse (1) längs der Achse (0-0) der Spindel (4) starr befestigten Drucklager (32) angeordnet ist.

7. Rotationsmeißel nach Anspruch 2, dadurch g e - k e n n z e i c h n e t, daß die Buchse (49) der Vorrichtung zum Festziehen von Drucklagern in bezug auf das Gehäuse (1) mit Hilfe einer zylindrischen Büchse (50) unbeweglich befestigt ist, die konzentrisch zur Zange (51) zwischen der Stirnfläche (52) der Buchse (49) und dem am Gehäuse (1) längs der Achse (0-0) der Spindel (4) starr befestigten Drucklager (32) angeordnet ist.

8. Rotationsmeißel nach Anspruch 1, dadurch g e - k e n n z e i c h n e t, daß der Schaft (53) mit einem zylindrischen Hohlraum (54) ausgeführt ist, in dem die Vorrichtung zum Festziehen von Drucklagern untergebracht ist, welche aus einem Einzelteil in Form einer Zange (55) und einem Einzelteil in Form eines Kegels (56) besteht, der mit seiner Außenfläche (57) der Innenfläche (58) der Zange (55) zugeordnet ist.

9. Rotationsmeißel nach Anspruch 8, dadurch g e - k e n n z e i c h n e t, daß der Kegel (56) der Vorrichtung zum Festziehen von Drucklagern in bezug auf das

0317635

Gehäuse (1) mittels eines gleichachsig mit der Spindel (4) angeordneten Bechers (59), der sich mit seinem Bodenteil (60) an dem am Gehäuse (1) längs der Achse der Spindel (4) starr befestigten Drucklager (32) und mit seiner Stirnfläche (62) an der hinteren Lagerung (3) abstützt, sowie mittels eines Stabes (61) unbeweglich befestigt ist, der gleichachsig zum Becher (59) angeordnet und mit seinen Enden im Bodenteil (60) desselben und im Kegel (56) starr befestigt ist.

0317635

FIG.1

FIG.2

FIG.3

FIG.4

# INTERNATIONAL SEARCH REPORT

International Application No PCT/SU 87/00070

**I. CLASSIFICATION OF SUBJECT MATTER** (if several classification symbols apply, indicate all) *

According to International Patent Classification (IPC) or to both National Classification and IPC

IPC[4]   B 23 B 27 /12

**II. FIELDS SEARCHED**

| Minimum Documentation Searched [7] | |
|---|---|
| Classification System | Classification Symbols |
| IPC[4] | B 23 B 27/12 |

Documentation Searched other than Minimum Documentation
to the Extent that such Documents are Included in the Fields Searched [8]

**III. DOCUMENTS CONSIDERED TO BE RELEVANT [9]**

| Category * | Citation of Document, [11] with indication, where appropriate, of the relevant passages [12] | Relevant to Claim No. [13] |
|---|---|---|
| A | SU, A1, 450647, (Belorussky ordena Trudovogo Krasnogo Znameni-zavod "BELAZ") 15" December 1974 (15.12.74) | 1 |
| A | SU, A1, 1144777, (Novopolotsky politekhnichesky institut im. Leninskogo komsomola Belorussii), 15 March 1985 (15.03.85) | 1 |
| A | SU, A1, 1144778, (Novopolotsky politekhnichesky institut im. Leninskogo Komosomola Belorussii), 15 March 1985 (15.03.85) | 1 |
| A | SU, A1, 1220857, (Novopolotsky politekhnichesky institut im. Leninskogo Komosomola Belorussii), 30 March 1986 (30.03.86) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 December 1987 (10.12.87) | 24 February 1988 (24.02.88) |
| International Searching Authority | Signature of Authorized Officer |
| ISA/SU | |

Form PCT/ISA/210 (second sheet) (January 1985)